# EUROPÄISCHE PATENTSCHRIFT

(11) **EP 1 342 556 B1**
(45) Veröffentlichungstag und Bekanntmachung des Hinweises auf die Patenterteilung: **20.10.2004**
(21) Anmeldenummer: 03002879.9
(22) Anmeldetag: 08.02.2003
(51) Int. Cl.: B29C 70/48, B29C 70/34, B29C 33/30, B29D 31/00, B64C 1/00, B29C 33/52, B29B 11/16

(54) **Verfahren zur Herstellung eines Bauteiles in Faserverbundbauweise**
Process for producing a fiber reinforced composite component
Procédé de fabrication d'une pièce en matériau composite renforcé de fibres

(30) Priorität: 09.03.2002 DE 10210517
(43) Veröffentlichungstag der Anmeldung: 10.09.2003
(73) Patentinhaber: Airbus Deutschland GmbH, 21129 Hamburg (DE)
(72) Erfinder: Staub, Martin, 22393 Hamburg (DE); Leeraar, Tim, 21614 Buxtehude (DE); Filsinger, Jürgen, 74613 Oeringen (DE); Gessler, Andreas, 85540 Haar (DE)
(74) Vertreter: Hansmann, Dierk, Dipl.-Ing.

(56) Entgegenhaltungen:
- EP-A- 1 231 077
- GB-A- 2 191 443
- US-A- 4 591 400
- US-A- 5 225 016
- US-A- 5 624 618

## Beschreibung

Die Erfindung betrifft ein Verfahren zur Herstellung eines Bauteiles in Faserverbundbauweise eines Beschlag für Flugzeugstrukturen unter Anwendung eines RTM-Verfahrens resin transfer molding , bei dem ein vorgefertigtes Halbzeug aus Faserwerkstoffen in eine geschlossene Form eingelegt, in der Form ein Vakuum erzeugt, das Halbzeug mit Harz bzw. mit einem Harz/Härter-Gemisch getränkt und anschließend unter Druck und Temperatur ausgehärtet wird.

Zur Herstellung von Bauteilen in Faserverbundbauweise ist ein Verfahren bekannt, bei dem Gewebelagen auf Maß zugeschnitten, mit Harz getränkt und anschließend in eine Vorrichtung eingelegt werden. Die Vorrichtung wird zusammen mit den vorkonfektionierten Gewebelagen in Vakuumfolie eingepackt und in einen Autoklaven eingebracht, wo eine Aushärtung des Bauteiles erfolgt. Auch bei dem auf diese Weise hergestellten Bauteil erfolgt eine Nachbearbeitung durch Fräsen, Bohren oderdergleichen.

Nach der US-A-5 624 618 ist ein Verfahren zur Herstellung einer Struktur für eine Flugzeuggasturbine bekannt geworden. Hierbei wird ein Verfahren zum Bilden einer umflochtenen verbundkonstruktion komplexer Geometrie mit Hohlräumen vorgeschlagen, wobei die Hohlräume von Wänden mit geformten Flächen begrenzt sind. Es sind dabei eine Vielzahl von netzförmigen entfernbaren Formkernen mit Formen zur Anpassung an die gewünschte Hohlraumgeometrie eingesetzt. Ferner werden die Formkerne längs einer horizontale Achse zu einer Anordnung gestapelt und das Flechten von Fasern über die gestapelte Anordnung von Formkernen durchgeführt.

Zur Trennung der umflochtenen Formkerne erfolgt ein Schneiden an den Hohlraumenden und es schließt sich ein seitliches Stapeln der getrennten Formkerne an, daß die Hohlraumenden nebeneinander liegen und das Formgießen der seitlich gestapelten umflochtenen Formkerne umfaßt.

Der Erfindung liegt nun die Aufgabe zugrunde, ein automatisiertes Verfahren zur Herstellung von Halbzeugen bzw. Bauteilen der eingangs genannten Art zu schaffen.

Die Aufgabe wird erfindungsgemäß durch folgende Verfahrensschritte und gemäß dem Anspruch 1 gelöst:
- ein endkonturennaher, aus zwei trennbaren Hälften bestehender Werkzeugkern wird mittels eines automatischen Rundflechtprozesses mit mindestens einer Lage aus Faserwerkstoff umflochten,
- nach Fertigstellung des Geflechtes wird eine Hälfte des Werkzeugkernes entfernt,
- das die andere Werkzeugkernhälfte umgebende Geflecht wird in die vorgegebene Form des Halbzeuges gepreßt,
- das ausgeformte Halbzeug wird in eine RTM-Vorrichtung eingelegt, mit Harz imprägniert und zur Fertigstellung des Bauteiles ausgehärtet, und
- die in dem Bauteil verbliebene Hälfte des Werkzeugkernes wird aus dem Bauteil entfernt.

Ausgestaltungen der Erfindung in den Unteransprüchen 2 bis 6 beschrieben.

Wesentliche Vorteile des erfindungsgemäßen Verfahrens sind in einer kurzen Verfahrenszeit, hohen Reproduzierbarkeit und hohen Ausbringungsrate sowie in einem geringeren Gewicht gegenüber Bauteilen aus Aluminium und in einem geringerem Wartungsaufwand bei den Fluggesellschaften zu sehen.

In der Zeichnung ist ein Ausführungsbeispiel eines Werkzeugkernes zur Durchführung des erfindungsgemäßen Verfahrens dargestellt, und zwar zeigt:
- Fig. 1: den Werkzeugkern in perspektivischer Ansicht, sowie
- Fig. 2: drei Seitenansichten des Werkzeugkernes gemäß Fig. 1 im Schnitt A-A, wobei der Werkzeugkern von mehreren Lagen aus Faserwerkstoff umwickelt ist.
- Fig. 3: zeigt weiterhin einen nach dem erfindungsgemäßen Verfahren hergestellten Beschlag in Vorder-, Seiten- und Draufsicht.

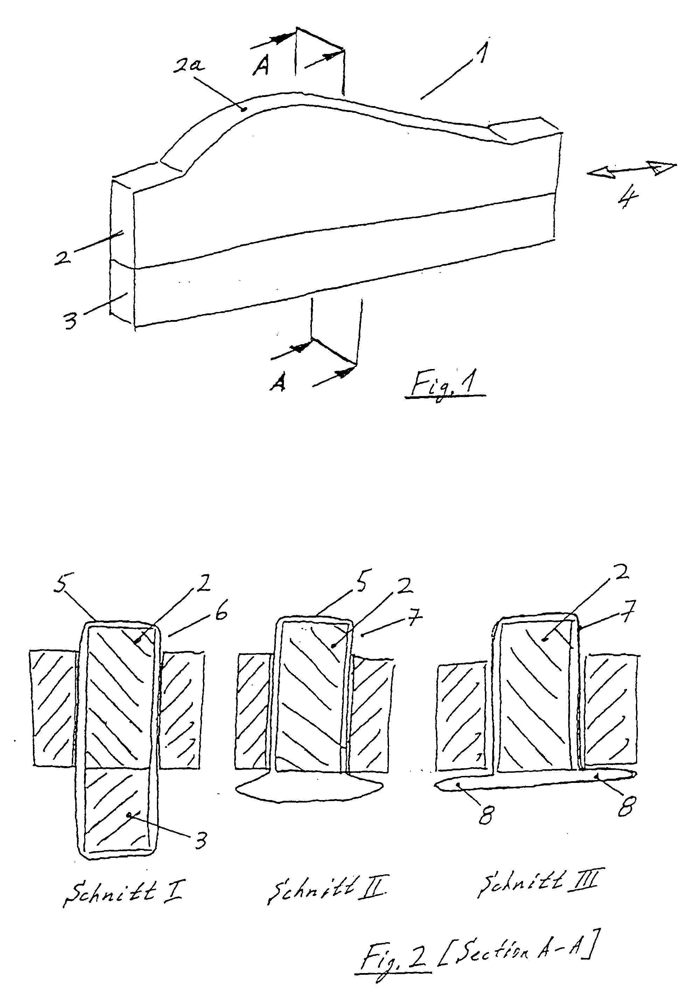

Gemäß Fig. 1 besteht der endkonturennahe Werkzeugkern 1 aus zwei zusammengesetzten Werkzeugkernhälften, und zwar dem eine Wölbung 2a aufweisenden Flechtkernoberteil 2 und dem quaderförmigen Flechtkernunterteil 3. Der aus den Hälften 2 und 3 zusammengesetzte Werkzeugkern 1 wird in einem ersten Verfahrensschritt zur Herstellung eines Bauteiles in Faserverbundbauweise, vorzugsweise eines Beschlages für Flugzeugstrukturen, mit Hilfe eines automatischen Rundflechtprozesses mit mindestens einer Lage aus Faserwerkstoff umflochten. Die Flechtrichtung ist durch einen Richtungspfeil 4 gangezeigt.

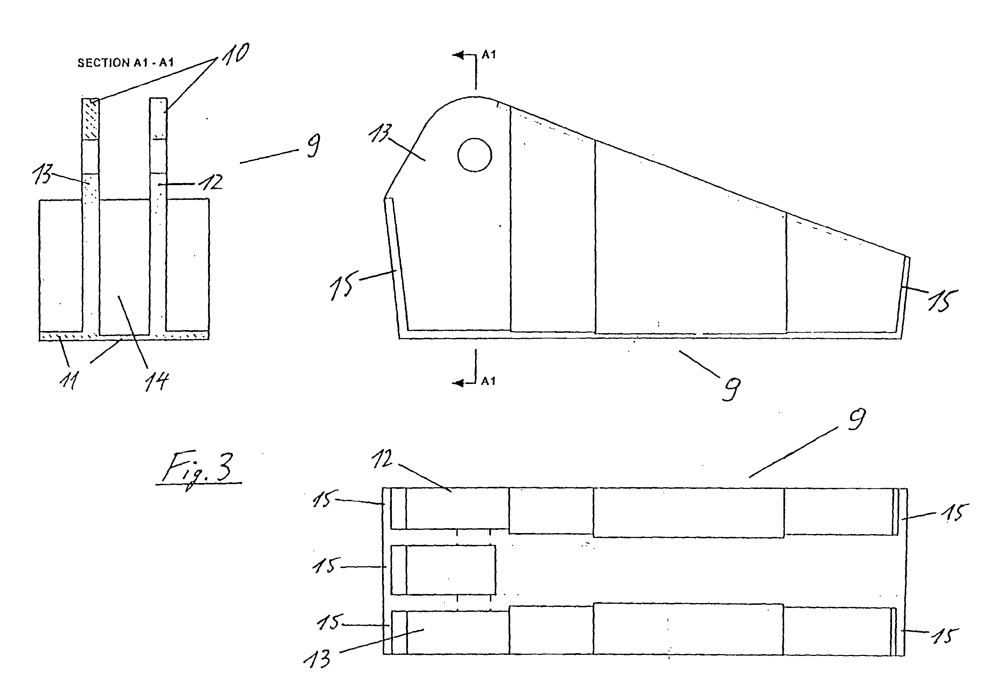

Der erste Schnitt I in Fig. 2 zeigt einen Werkzeugkern 1 mit seinen beiden Hälften 2 und 3, wobei der Werkzeugkern 1 von mehreren Lagen aus Faserwerkstoff 5 umflochten ist. Hierbei können vorkonfektionierte Verstärkungslagen, vorzugsweise aus Faserwerkstoffen, nach Aufbringung von einer wählbaren Anzahl von Faserwerkstoffenlagen auf dem Flechtkern fixiert werden, wobei diese Verstärkungslagen nach ihrem Aufbringen mit weiteren Faserwerkstoffen derart umflochten werden, bis das vorgegebene Geflecht 6 hergestellt ist. Die Aufbringung aller Lagen aus Faserwerkstoff erfolgt mittels des oben erwähnten automatischen Rundflechtprozesses.

Der zweite Schnitt II in Fig. 2 zeigt einen unvollständigen Werkzeugkern 1, da das quaderförmige Flechtkernunterteil 3 nach Fertigstellung des Geflechtes 6 entfernt worden ist.

Das Geflecht 6 wird durch Pressen in die vorgegebene Form des Halbzeuges 7 gebracht, wobei Schnitt II eine Zwischenposition zeigt. Die endgültige Form des Halbzeuges 7 ist Schnitt III zu entnehmen, wobei das geformte Halbzeug 7 Holmanschlüsse 8 aufweist. Unter einem Holmanschluß 8 ist ein Anschluß an die Primärstruktur eines Luftfahrzeuges zu verstehen. Auch ist es möglich, das Geflecht nach dem Entfernen des quaderförmigen Flechtkernunterteils 3 und vor dem Einlegen in die RTM-Vorrichtung durch Umlegen der Vertärkungslagen in ein Hautanschlüsse 15 aufweisendes Halbzeug umzuformen, wie beispielsweise aus Fig. 3 ersichtlich ist. Hierbei kann ein Hautanschluß 15 durch die Außenhaut eines Strukturbauteiles gebildet werden.

Nach Fertigstellung des ausgeformten Halbzeuges 7 mit Holmanschluß 8 wird dieses in eine zeichnerisch nicht dargestellte RTM-Vorrichtung eingelegt, mit Harz imprägniert und zur Fertigstellung des Bauteiles ausgehärtet. Anschließend wird die in dem ausgehärteten Bauteil verbliebene Hälfte 2 des Werkzeugkernes 1 aus dem Bauteil herausgeschmolzen. Abschließend kann das ausgehärtete Bauteil mechanischen Bearbeitungsvorgängen, wie z. B. Fräsen, Bohren, Einbau von Buchsen usw., unterzogen werden.

Der aus Fig. 3 ersichtliche Beschlag 9 für eine Flugzeugstruktur ist nach dem erfindungsgemäßen Verfahren herstellbar, wobei ein System zur Durchführung des Rundflechtverfahrens Anwendung findet. Das System besteht aus einem Rundflechtautomaten, einem Manipulationssystem und einem Industrieroboter, der einen komplexen Flechtkern trägt. Hierbei können vorläufige Profilformen durch Umformen und Vernähen, Knotenelemente mit zerlegbarem Kern und Hohlkörper mit ausschmelzbarem Kern erzeugt werden.

Der Beschlag 9 weist einen Doppel-T-Querschnitt 10 auf, wobei sich zwischen den über einen Quersteg 11 miteinander verbundenen Stegen 12 und 13 ein Blindbereich 14 befindet. Der Beschlag 9 ist aus Flechtlagen 5, d.h. aus Lagen von Faserwerkstoff aufgebaut, wobei die gewählten Materialdicken so gewählt werden können, daß sich durch das Flechten eine Dicke von 1,2 mm für eine Flechtlage und eine Dicke von 0,25 mm für eine Verstärkungslage bei circa 60% Faservolumenanteil ergibt. Für dieses Beispiel ergibt sich die Dicke der Flechtlage aus 0,4 mm Dicke für die Stehfädenlagen und 0,8 mm Dicke für die Flechtfädenlagen in + und - Ausrichtung. Der im Rundflechtverfahren hergestellte Beschlag 9 weist verfahrensspezifische Eigenschaften auf, beispielsweise hat der Flechtschlauch über den Querstegbereich 10 des Beschlages 9 einen veränderlichen Faserverlauf. Für die Flechtfäden wird dieser Verlauf bei +/- 30° beginnen und bei +/- 60° bis 70' enden. über den Flechtbereich haben auch die Stehfäden (0°) einen veränderlichen Winkel.

### Bezugszeichenliste

- 1: endkonturennaher Werkzeugkern
- 2: Flechtkernoberteil / obere Hälfte des Werkzeugkerns 1
- 2a: Wölbung des Flechtkernoberteil 2
- 3: Flechtkernunterteil / untere Hälfte des Werkzeugkerns 1
- 4: Richtungpfeil für Flechtrichtung
- 5: Lagen aus Faserwerkstoff
- 6: Geflecht aus Faserwerkstoff 5
- 7: Halbzeug
- 8: Holmanschlüsse
- 9: Beschlag

- 10: Doppel-T-Querschnitt des Beschlages 9
- 11: Quersteg des Beschlages 9
- 12: Steg des Beschlages 9
- 13: Steg des Beschlages 9
- 14: Blindbereich Beschlages 9
- 15: Hautanschluß

## Patentansprüche

1. Verfahren zur Herstellung eines Bauteiles in Faserverbundbauweise als Beschlages für Flugzeugstrukturen unter Anwendung eines RTM-Verfahrens-resin transfer molding-, bei dem ein vorgefertigtes Halbzeug aus Faserwerkstoffen in eine geschlossene Form eingelegt, in der Form ein Vakuum erzeugt, das Halbzeug mit Harz bzw. mit einem Harz/Härter-Gemisch getränkt und anschließend unter Druck und Temperatur ausgehärtet wird, wobei
- ein endkonturennaher, aus zwei trennbaren Hälften (2, 3) bestehender Werkzeugkern (1) wird mittels eines automatischen Rundflechtprozesses mit mindestens einer Lage aus Faserwerkstoff (5) umflochten,
- nach Fertigstellung des Geflechtes (6) wird eine Hälfte (3) des Werkzeugkernes (1) entfernt,
- das die andere Werkzeugkernhälfte (2) umgebende Geflecht (6) wird in die vorgegebene Form des Halbzeuges (7) gepreßt,
- das ausgeformte Halbzeug (7) wird in eine RTM-Vorrichtung eingelegt, mit Harz imprägniert und zur Fertigstellung des Bauteiles ausgehärtet, und
- die in dem Bauteil verbliebene Hälfte (2) des Werkzeugkernes (1) wird aus dem Bauteil entfernt.

2. Verfahren nach Anspruch 1, wobei vorkonfektionierte Verstärkungslagen nach Aufbringung von einer wählbaren Anzahl von Faserwerkstofflagen auf dem Flechtkern fixiert werden, und wobei die Verstärkungslagen mit weiteren Faserwerkstoffen umflochten werden.

3. Verfahren nach Anspruch 2, wobei Verstärkungslagen aus Faserwerkstoffen (5) verwendet werden.

4. Verfahren nach Anspruch 1, 2 oder 3, wobei das Geflecht (6) nach dem Entfernen der ersten Hälfte (3) des Werkzeugkernes (1) und vor dem Einlegen in die RTM-Vorrichtung in ein Holmanschlüsse (8) aufweisendes Halbzeug (7) umgeformt wird.

5. Verfahren nach Anspruch 2 oder 3, wobei das Geflecht (6) nach dem Entfernen der ersten Hälfte (3) des Werkzeugkernes (1) und vor dem Einlegen in die RTM-Vorrichtung durch Umlegen der Verstärkungslagen in ein Hautanschlüsse (15) aufweisendes Halbzeug (7) umgeformt wird.

6. Verfahren nach einem der Ansprüche 1 bis 5, wobei das ausgehärtete Bauteil mechanischen Bearbeitungsvorgängen, wie Fräsen, Bohren, Einbau von Buchsen usw. ,unterzogen wird.

## Claims

1. A process for making a component by the fibre composite method, as a fitting for aircraft structures, using an RTM (resin transfer moulding) process, in which a prefabricated preform made from fibre materials is laid in a closed mould, a vacuum is generated in the mould, the preform is impregnated with resin or with a resin/curing agent mixture and is then cured under pressure and heat, in which
- at least one layer of fibre material (5) is braided around a mould core (1), which comprises two separable halves (2, 3) and approximates to the final contour, by means of an automatic circular braiding procedure,
- once the braiding (6) is complete, one half (3) of the mould core (1) is removed,
- the braiding (6) surrounding the other half (2) of the mould core is pressed into the predetermined shape of the preform (7),
- the shaped preform (7) is laid in an RTM device, impregnated with resin and cured to produce the finished component, and
- the half (2) of the mould core (1) which is still in the component is removed from the component.

2. A process according to Claim 1, in which, once a selectable number of fibre material layers has been applied, prefabricated reinforcing layers are fixed to the braided core, and in which further fibre materials are braided around the reinforcing layers.

3. A process according to Claim 2, in which reinforcing layers of fibre materials (5) are used.

4. A process according to Claim 1, 2 or 3, in which, after the first half (3) of the mould core (1) has been removed and before the laying in the RTM device, the braiding (6) is re-shaped into a preform (7) having adjoining parts in the form of tie bars (8).

5. A process according to Claim 2 or 3, in which, after the first half (3) of the mould core (1) has been removed and before the laying in the RTM device, the braiding (6) is re-shaped into a preform (7) having adjoining parts in the form of a skin (15) as a result of the reinforcing layers being laid around it.

6. A process according to one of Claims 1 to 5, in which the cured component is subjected to mechanical machining procedures, such as milling, drilling, the incorporation of bushings, etc.

## Revendications

1. Procédé de fabrication d'une pièce en matériau composite à base de fibres comme armature pour structures d'avions en appliquant un procédé RTM - moulage en résine par transfert -, dans lequel un produit semi-ouvré préfabriqué en matériaux fibreux est introduit dans un moule fermé, un vide est produit dans le moule, le produit semi-ouvré est imprégné de résine ou d'un mélange de résine et d'agent durcissant et, ensuite, durci sous l'effet d'une pression et d'une température,
dans lequel
- un noyau d'outil (1) constitué de deux moitiés séparables (2, 3) et proche du contour final est entouré d'au moins une couche de matériau fibreux (5) au moyen d'un procédé automatique de tressage circulaire,
- après fabrication du tressage (6), une moitié (3) du noyau d'outil (1) est retirée,
- le tressage (6) entourant l'autre moitié (2) du noyau d'outil est comprimé dans la forme prédéterminée du produit semi-ouvré (7),
- le produit semi-ouvré moulé (7) est introduit dans un dispositif RTM, imprégné de résine et durci pour finir la pièce, et
- la moitié (2) du noyau de moule restant dans la pièce est retirée de la pièce.

2. Procédé selon la revendication 1, dans lequel les couches de renforcement pré-élaborées sont fixées sur le noyau de tressage après application d'un nombre sélectionnable de couches de matériau fibreux et dans lequel les couches de renforcement sont tressées avec d'autres matériaux fibreux.

3. Procédé selon la revendication 2, dans lequel on utilise des couches de renforcement en matériaux fibreux (5).

4. Procédé selon la revendication 1, 2 ou 3, dans lequel le tressage (6) est converti, après le retrait de la première moitié (3) du noyau d'outil (1) et avant l'introduction dans le dispositif RTM, en un produit semi-ouvré (7) présentant des raccords en longerons.

5. Procédé selon la revendication 2 ou 3, dans lequel le tressage (6) est converti, après le retrait de la première moitié (3) du noyau d'outil (1) et avant l'introduction dans le dispositif RTM par déplacement des couches de renforcement, en un produit semi-ouvré (7) présentant des raccords de peau (15).

6. Procédé selon l'une quelconque des revendications 1 à 5, dans lequel la pièce durcie est soumise à des opérations d'usinage mécaniques telles qu'un fraisage, un perçage, un montage de douilles, etc.
